# EUROPEAN PATENT SPECIFICATION

(11) **EP 3 186 473 B1**
(45) Date of publication and mention of the grant of the patent: **29.05.2019**
(21) Application number: 15835572.7
(22) Date of filing: 26.08.2015
(51) Int. Cl.: E21B 41/00, E21B 17/01, F16L 5/04, F16L 57/04, F16L 5/10, F16L 5/02

(54) **FIRE AND EXPLOSION-PREVENTING COVER**
FEUER- UND EXPLOSIONSVERHINDERNDE ABDECKUNG
COUVERCLE DE PRÉVENTION D'INCENDIE ET D'EXPLOSIONS

(30) Priority: 27.08.2014 NO 20141047
(43) Date of publication of application: 05.07.2017
(73) Proprietor: Firesafe Energy AS, 0605 Oslo (NO)
(72) Inventor: KILLERUD, Atle, 1914 Ytre Enebakk (NO); PAULSEN, Pål, 1914 Ytre Enebakk (NO)
(74) Representative: Protector IP AS
(86) International application number: PCT/NO2015/050145
(87) International publication number: WO 2016/032340

(56) References cited:
- WO-A1-99/18303
- DE-A1- 10 350 385
- DE-A1-102006 001 644
- US-A- 4 086 736
- US-A- 4 479 656
- US-A1- 2012 012 347
- US-A1- 2012 012 347

## Description

The present invention relates to a cover for preventing fire and explosion through an opening around a drilling riser, intervention riser, movable pipes or similar.

On a wellhead, installation such as an oil or gas drilling or production platform, fire or explosions is a continuous hazard. Much resource have been put into both preventing fires and explosions from being initiated, and if they should occur, prevent them from spreading.

To prevent spreading, the installation is equipped with fireproof walls and floors wherever possible. If access openings are formed in a fireproof wall or floor, they are equipped with fireproof hatches or other types of closures that should be kept closed as far as possible.

Despite this, there are some openings that are very difficult to keep closed. Some of these openings are the access openings for tubes such as drilling risers, injection risers, intervention risers and other tubes or tubes that extend from an offshore installation to a subsea position. These risers are subject to large horizontal or vertical motion. The motion is due to temperature or pressure changes in the riser or environmental load such as wind, current and wave loads. The riser may also be supported by different units, such as floater or fixed platforms. These access openings are particularly difficult since the riser is constantly moving. The covers around these tubes therefore have to accommodate the movement of the tube relative to the opening.

A common way of closing such tube openings is to press bulky circular or semicircular rubber buffers between the riser and the opening perimeter. The rubber will accommodate, to some degree, the lateral movement of the tube, but to the expense of significant wear. Consequently, the rubber buffers must be frequently changed. The buffers are also difficult to install and remove when it is necessary to shift the tube. This solution is supplied by the company Trelleborg.

From US 4479656 is known a sealing means to seal around a conductor tube.

The sealing means consists of two annular elements arranged around a conductor and connected to the conductor and the deck, respectively, thereby forming an annular trough in which one of the elements protrudes. The trough is filled with a flexible substance, such as a silicone foam.

This device will, as for the known rubber buffers, only accommodate movement of the tube to a limited degree. Moreover, it is virtually impossible to remove it without partially destroying the device.

US 2012/0012347 describes an arrangement for protecting against fire at a wall opening through which a pipe extends. The flexible cover is attached to the pipe at one end and to the wall at the opposite end. The cover has a split along its side enabling mounting of the cover after the pipe has been installed. The split is closed by a hook and loop (Velcro®) band attached to the cover along the split.

The split makes the cover unable to withstand the high pressures from an explosion and the cover may therefore only withstand, for a limited time, fires that evolve rather slowly. An explosion would immediately open up the split and let the whole explosion pressure through the opening around the pipe.

The cover is also adapted to close an opening around a pipe that has been installed in a fixed position. On a floating structure, a riser will move both to a certain degree axially and especially laterally. The known cover is not capable of taking up such movement.

Consequently, there is a great need for an improved cover seal around riser tubes or similar tubes that extend through openings in a floor, such as a drill floor on an oil or gas installation. The seal should accommodate the lateral movement of the tube to a greater extent than the current seals and it should be easy to install and remove, as well as provide adequate fire and blast protection.

The cover seal has to be able to accommodate running of larger units through the opening in the floor without having to remove the cover from around the opening. Such units may be almost as wide as the diameter of the opening in the floor. On the other hand, the cover also has to close tightly around the riser tube, which has a substantially smaller diameter than the opening in the floor.

The present invention aims to provide such a seal. This is achieved by a cover seal arrangement that comprises an uninterrupted continuous flexible sheet that is attached at one end to the floor in an encircling relationship with the opening, and at an opposite end is attached to the tube, and that the cover sheet comprises a tube attachment portion having gussets enabling folding of the cover sheet to reduce the diameter of the tube attachment portion to a diameter substantially equal to the diameter of the tube.

A greater flexibility is achieved if the cover sheet is generally bell shaped, but comprises an inwardly extending crevice having a smallest diameter that is smaller than the diameter of the opening.

By providing an upper portion of the cover sheet with gussets, is achieved folding of the cover sheet to enable a reduced diameter of the upper portion to a diameter substantially equal to the diameter of the tube.

By providing the upper section of the cover sheet with brackets, the tube attachment portion can be hoisted in place and the brackets can function as foundations for fixation means, such as tightening bands, to fix the cover sheet to the tube.

Preferably, the cover arrangement comprises a plurality of wires extending from the lower edge of the cover sheet to the tube attachment portion. These wires provide strength both during installation and use.

If the wires are attached to a lower support ring at the lower edge and to the brackets at the tube attachment portion, they will provide strength to the cover sheet along its full height.

Preferably, the wires are embedded inside the cover sheet. This protects the wires and ensures that they follow the shape of the cover sheet.

In a preferred embodiment, the cover sheet material comprises a plurality of layers of material with different properties, such as at least one water resistant layer, at least one high temperature resistant layer, at least one anti-erosion layer, and at least one insulating material layer. This provides the cover shhet with the ability to withstand different kinds of impact.

The invention will now be described in a preferred embodiment, referring to the accompanying drawings, in which:
Figure 1 shows the seal of the invention in a partially installed state (open state) in cross section,
Figure 2 shows the seal of the invention in an installed state (closed state) in cross section,
Figure 3 shows the seal of the invention in an installed state in isometric view,
Figure 4 shows details concerning the fixation of the seal of the invention, and

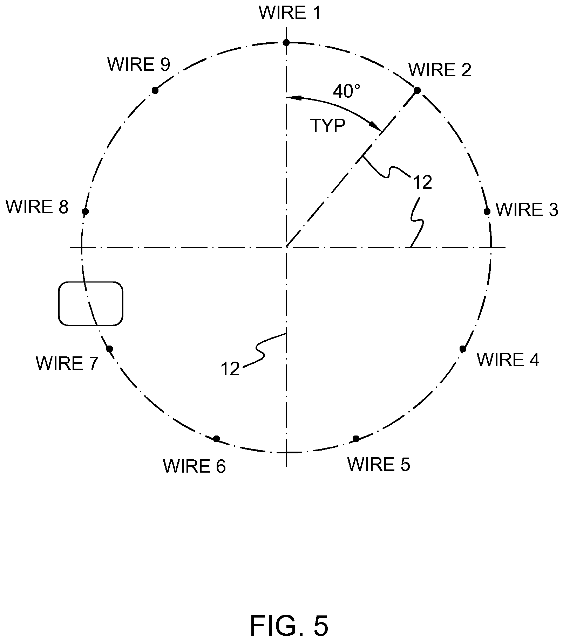

Figure 5 shows schematically the wire arrangement of the seal.

When in the subsequent description terms such as upper and lower, above and below etc. are used, this relates to the usual orientation of the device of the invention when in use. There is no intention to limit the scope of the invention by the use of these orientational terms.

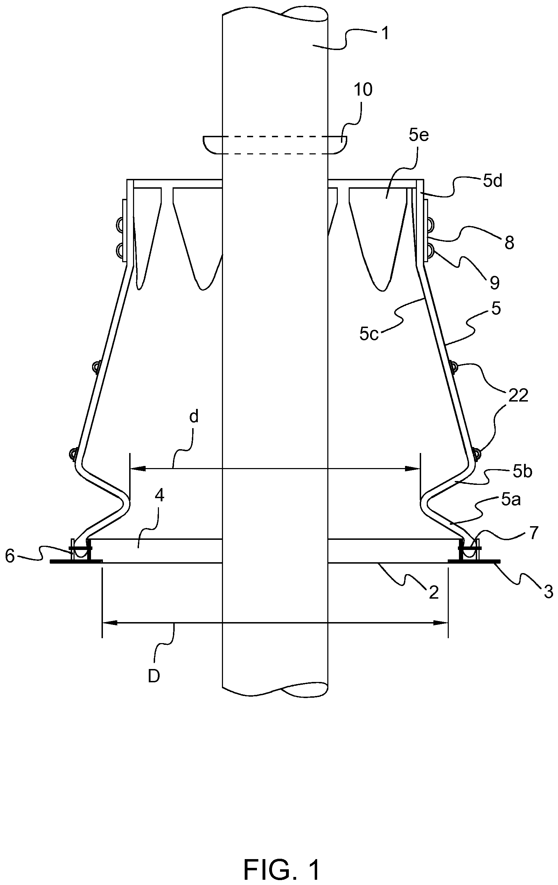

Figure 1 shows the cover seal of the invention in a partially installed state, i.e. before attachment to a tube. A riser tube 1, which may be a drilling riser, an injection riser, or other types of tubes used on a drilling or production facility, extends through an opening 2 in a floor 3 of a floating or fixed facility (not shown). Around the opening, a ring or flange 4 (hereinafter termed "fixed ring") has been fixed by, e.g., welding or bolting. A cover 5 has been fixed to the fixed ring 4 by a detachable ring 6 or ring segments 6. Bolts 7 extend through the detachable ring 6 and the fixed ring 4.

The cover sheet 5 itself comprises a multilayer fabric that is very durable and is fire and explosion proof. The materials are readily available on the market, but the choice of materials and the configuration of the layers will be a trade secret. The cover 5 also includes a wire net, bolts, and steel-brackets, to fix the cover and to uphold a shape that is suitable for the required movement of the cover, as will be explained further below.

The cover sheet 5 is continuous and is shaped with a first section 5a that is tapering inwards from the fixed ring 4. Thereafter the cover sheet 5 has an outwardly flaring section 5b. The transition between the inwardly tapering section 5a and the outwardly flaring section 5b forms the smallest diameter d of the cover sheet 5. This diameter d is smaller than the diameter D of the opening 2.

From the outwardly flaring section 5b the cover sheet 5 again tapers inwardly in a section 5c. At the upper end, the cover sheet has a cylindrical section 5d. The shape and diameter of these sections 5a-5d are depending on the diameter of the opening 2 and the diameter of the tube 1. The cylindrical section 5d is equipped with gussets 5e of a material that is more flexible than the rest of the cover sheet 5 material.

At the cylindrical section, the cover 5 is equipped with brackets 8 that are placed between the gussets 5e. The brackets have ears 9, which will be explained later.

At a position above upper edge of the cover 5, the riser tube 1 is equipped with a ring shaped clamp 10. The clamp 10 is equipped with ears that are not readily visible in the drawings. The clamp may be omitted if the cover 5 is small, such as a cover for sealing around an injector tube.

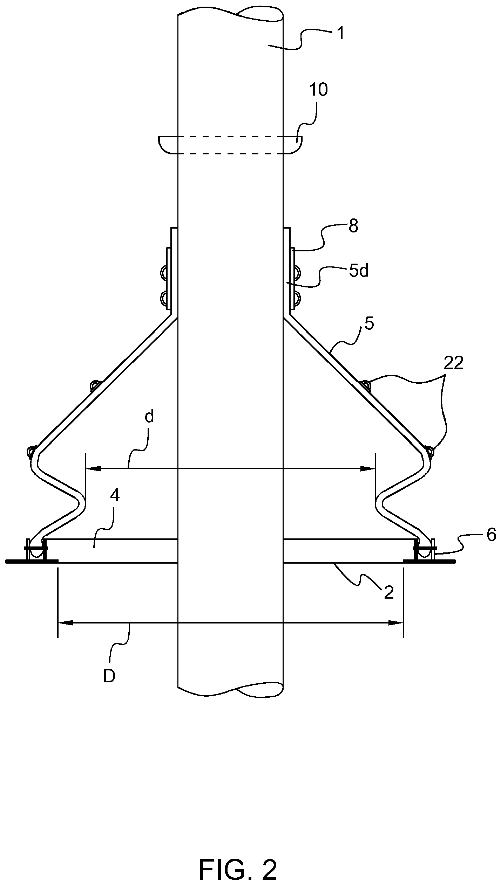

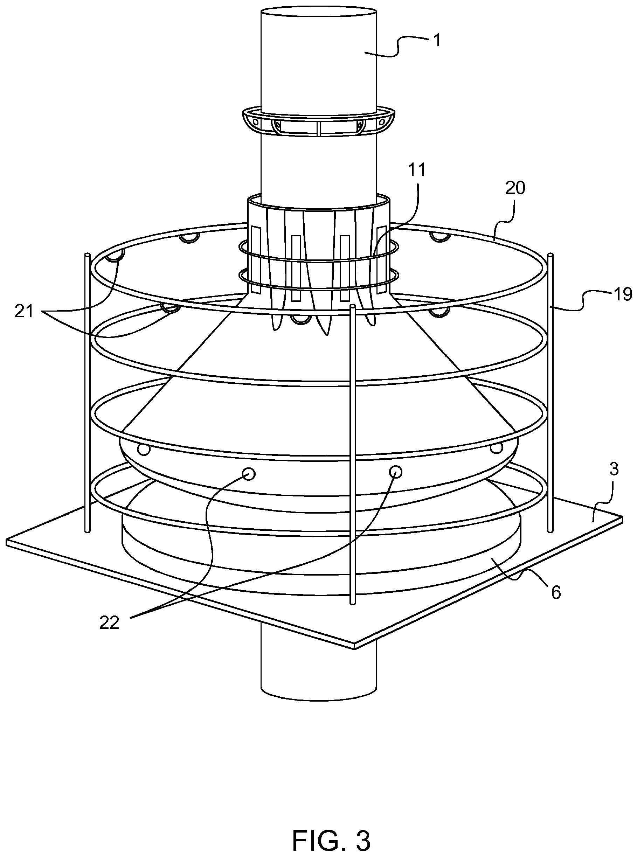

Figures 2 and 3 shows the cover 5 in sealing engagement around the riser tube 1. The gussets 5e have been folded so to reduce the diameter of the cylindrical section 5d to the same diameter as the outer diameter of the riser tube 1. In this state fire proof tightening bands 11 (see figure 3) have been tightened around the cylindrical portion 5d of the cover 5 to hold the cylindrical portion 5d tightly against the riser tube 1. The bands 11 have been threaded through the ears 9 of the brackets 8 so that they are prevented from shifting upwards or downwards. In this state, the cover 5 forms a bellow around the riser tube 1. Due to the reduced diameter d of the cover, the cover can accommodate great movements of the riser tube, both in the vertical and horizontal directions, without being stretched.

Figure 3 shows a railing 19 arranged around the opening 2. The railing has an upper handrail 20, which is equipped with a plurality of ears 21. The function of these will be explained below. The railing serves both the function of protecting persons from the moving riser tube and as a support device during transport and installation of the cover 5. The railing may be omitted, especially if the cover 5 is of a small dimension.

The cover 5 and the railing 19 may be attached to a hatch that comprises the fixed ring 4. The hatch is in turn attached to the deck 3 of the floating facility by means known per se.

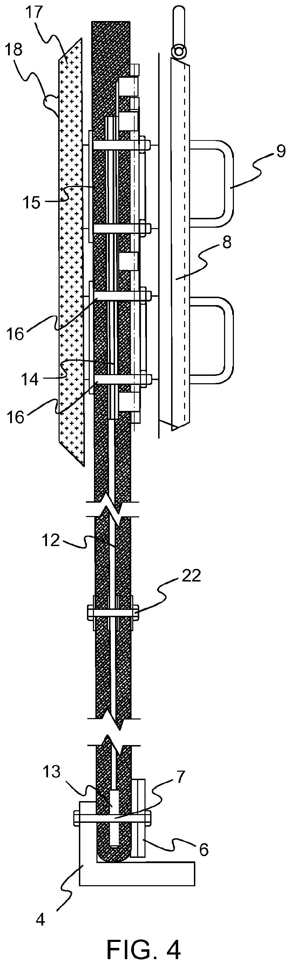

The details of the fixation of the cover 5 will now be explained referring to figure 4.

Inside the cover are arranged a plurality of wires 12 that extend between the lower edge and the upper edge of the cover 5. The wires are situated inside the cover 5, i.e. between layers of the cover 5. These wires will be explained further below.

The lower fixation of the cover 5 to the fixed ring 4 will now be explained, referring to figure 4. At the lower edge and inside the cover 5, i.e. in-between layers of the cover 5, is arranged a wire support ring 13, to which the wires 12 are attached. When the cover is attached to the fixed ring or flange 4, the lower edge of the cover 5 with the wire support ring 13 is placed immediately outside the fixed ring or flange 4. The wire support ring 13 and the cover 5 are equipped with holes (not shown) that are placed so as to be aligned with corresponding holes in the fixed ring 4. Thereafter the detachable ring 6 is arranged on the outside of the cover 5 lower edge. Holes in the detachable ring 6 are aligned with the holes in the cover 5, wire support ring 13 and the fixed ring 4. Subsequently, the bolts 7 are thread through the holes and tightened.

The wires 12 extend from the wire support ring 13 to the brackets 8 at the upper part of the cover 5. The arrangement at the upper part of the cover 5 will now be explained, also referring to figure 4. The arrangement is the same for each of the brackets 8.

Each of the wires 12 is attached to a wire plate 14, which also is situated inside the cover 5. At the inside of the cover 5 is arranged a one or more support plates 15. These plates are equipped with bolts 16 that are welded or otherwise integrated with the support plates 15. The bolts 16 extend through holes (not shown) in the cover 5 and the wire plate 14. The bracket 8 also has corresponding holes through which the bolts are threaded. The bracket 8 is attached to the bolts 16 by nuts (not shown) or similar.

At the inside of the cover is attached a soft sealing 17of an expanding fireproof material, to protect the tube 1 from the plates 15 and to achieve tightening between the cover 5 and tube 1 after folding of the cylindrical section 5d. One or more gaskets 18 can be attached to the soft sealing 17 to seal around the tube. The number of gaskets 18 depend on diameter of the tube 1 and the upper-diameter of the cover 5.

There are in the described embodiment a total of nine wires 12, one for each of the brackets 8. However, the number of wires may be more or less, depending on the circumference of the cover.

The installation of the cover will not be further explained, referring primarily to figures 1-3.

After the cover 5 has been attached to the fixed ring 4, as explained above, the tube 1 is inserted through the opening 2 and positioned. If the opening 2 is a large opening, such as used for drilling risers or similar, the ring shaped clamp 10 is attached at a suitable height around the tube 1. A plurality of lines (not shown) are connected between the ears 9 of the brackets 8, via the ears of the clamp 10 and the ears 21 of the railing 19. By pulling these lines, the upper part of the cover 5 can be lifted to the position shown in figure 1. At this position, the gussets 5e are folded carefully inwards so that the diameter of the cylindrical section 5d is reduced. When the diameter has been reduced to substantially the same as the tube 1, the tightening bands 11 are thread through the ears 9 and tightened so that the cylindrical portion 5d lies tightly against the tube 1. The lines can then be removed.

The cover 5 may also be equipped with eyelets 22 (see figures 1 - 3). The eyelets are preferably attached to the wires 12, as shown in figure 4. Lines (not shown) can be provided between these eyelets and the fence 19 to keep up the bellow shape of the cover 5. The lines may be elastic.

The cover 5 may be preinstalled on the hatch with lines attached between the ears 9 and the railing 19 and between the eyelets 22 and the railing, to keep the cover in place. This greatly reduces the time needed to install the cover on the floating facility.

The wires 12 both act to support the cover during installation and use, but they also strengthen the cover 5 so that it can withstand greater blast pressures. There may also be wires extending in the circumferential direction of the cover to provide further strength.

If a blast occurs below or above the cover 5, the cover will first take up the explosion pressure by the intermediate sections 5a, 5b and 5c being displaced upwards or downwards. When these sections have reach their outer limit, the cover will be elastically deformed. When the elastic deformation has come to an end, most of the explosion pressure will have been absorbed. The cover material will be designed to withstand the remaining expected pressure of the explosion.

The cover material is made to withstand high temperatures, such as from jet fire and HC-fire for a total of at least 120 minutes. This will prevent the fire from spreading and increase the possibility of extinguishing the fire before it spreads.

## Claims

1. A cover seal arrangement for preventing fire and explosion propagating through a floor opening (2) around a tube (1), such as a drilling riser, intervention riser, or similar tubular element, **characterised in that** the cover (5) arrangement comprises an uninterrupted continuous flexible cover sheet that is attached at one end to the floor (3) in an encircling relationship with the opening (2), and at an opposite end is attached to the tube (1), and that the cover (5) sheet comprises a tube attachment portion (5d) having gussets (5e) enabling folding of the cover (5) sheet to reduce the diameter of the tube attachment portion (5d) to a diameter substantially equal to the diameter of the tube (1).

2. The cover seal arrangement of claim 1, **characterised in that** the cover sheet is generally bell shaped but comprises an inwardly extending crevice (5a, 5b) having a smallest diameter that is smaller than the diameter of the opening (2).

3. The cover seal arrangement of any of the preceding claims,
**characterised in that** it comprises brackets (8) attached to the tube attachment portion (5d).

4. The cover seal arrangement of any of the preceding claims,
**characterised in that** it comprises a plurality of wires (12) extending from a lower edge of the cover (5) sheet to an upper edge.

5. The cover seal arrangement of claims 3 and 4, **characterised in that** the wires (12) are attached to a lower support ring (13) at the lower edge of the cover (5) sheet and to the brackets (8) at the pipe attachment portion (5d).

6. The cover seal arrangement of claim 5, **characterised in that** said wires (12) are embedded inside the cover sheet.

7. The cover seal arrangement of any of the preceding claims,
**characterised in that** the cover sheet material comprises a plurality of layers of material with different properties, such as at least one water resistant layer, at least one high temperature resistant layer, at least one anti-erosion layer, and at least one insulating material layer.

## Patentansprüche

1. Abdeckdichtungsanordnung zum Verhindern der Ausbreitung von Feuer und Explosion durch eine Bodenöffnung (2) um ein Rohr (1) herum, wie beispielsweise eine Bohrsteigleitung, eine Eingriffsteigleitung oder ein ähnliches rohrförmiges Element, **dadurch gekennzeichnet, dass** die Abdeckanordnung (5) ein ununterbrochenes, kontinuierliches, flexibles Abdeckblech umfasst, das an einem Ende am Boden (3) die Öffnung (2) umgebend befestigt ist, und an einem gegenüberliegenden Ende an dem Rohr (1) befestigt ist, und dass das Abdeckblech (5) einen Rohrbefestigungsabschnitt (5d) mit Seitenfalten (5e) umfasst, die das Falten des Abdeckblechs (5) ermöglichen, um den Durchmesser des Rohrbefestigungsabschnitts (5d) auf einen Durchmesser zu reduzieren, der im Wesentlichen dem Durchmesser des Rohres (1) entspricht.

2. Abdeckdichtungsanordnung nach Anspruch 1, **dadurch gekennzeichnet, dass** das Abdeckblech im Allgemeinen glockenförmig ist, aber einen sich nach innen erstreckenden Spalt (5a, 5b) mit einem kleinsten Durchmesser umfasst, der kleiner als der Durchmesser der Öffnung (2) ist.

3. Abdeckdichtungsanordnung nach einem der vorstehenden Ansprüche, **dadurch gekennzeichnet, dass** sie Klammern (8) umfasst, die an dem Rohrbefestigungsabschnitt (5d) befestigt sind.

4. Abdeckdichtungsanordnung nach einem der vorstehenden Ansprüche, **dadurch gekennzeichnet, dass** sie eine Vielzahl von Drähten (12) umfasst, die sich von einer Unterkante des Abdeckblechs (5) zu einer Oberkante erstrecken.

5. Abdeckdichtungsanordnung nach den Ansprüchen 3 und 4, **dadurch gekennzeichnet, dass** die Drähte (12) an einem unteren Stützring (13) an der Unterkante des Abdeckblechs (5) und an den Klammern (8) am Rohrbefestigungsabschnitt (5d) befestigt sind.

6. Abdeckdichtungsanordnung nach Anspruch 5, **dadurch gekennzeichnet, dass** die Drähte (12) in das Abdeckblech eingebettet sind.

7. Abdeckdichtungsanordnung nach einem der vorstehenden Ansprüche, **dadurch gekennzeichnet, dass** das Abdeckblechmaterial eine Vielzahl von Materialschichten mit unterschiedlichen Eigenschaften umfasst, wie beispielsweise mindestens eine wasserfeste Schicht, mindestens eine hochtemperaturbeständige Schicht, mindestens eine erosionshemmende Schicht und mindestens eine Isoliermaterialschicht.

## Revendications

1. Agencement de couvercle d'étanchéité pour empêcher les incendies et les explosions de se propager à travers une ouverture de sol (2) autour d'un tube (1), tel qu'une colonne montante de forage, une colonne montante d'intervention ou un élément tubulaire similaire, **caractérisé en ce que** l'agencement du couvercle (5) comprend une feuille de couvercle souple continue ininterrompue qui est fixée au niveau d'une première extrémité au sol (3) dans une relation d'encerclement avec l'ouverture (2), et qui est fixée au niveau d'une extrémité opposée au tube (1), et en que la feuille du couvercle (5) comprend une partie de fixation de tube (5d) comportant des soufflets (5e) permettant de plier la feuille du couvercle (5) afin de réduire le diamètre de la partie de fixation de tube (5d) à un diamètre sensiblement égal au diamètre du tube (1).

2. Agencement de couvercle d'étanchéité selon la revendication 1, **caractérisé en ce que** la feuille de couvercle est généralement en forme de cloche, mais comprend une fente (5a, 5b) s'étendant vers l'intérieur ayant un diamètre le plus petit qui est inférieur au diamètre de l'ouverture (2).

3. Agencement de couvercle d'étanchéité selon l'une quelconque des revendications précédentes, **caractérisé en ce qu'**il comprend des supports (8) fixés à la partie de fixation de tube (5d).

4. Agencement de couvercle d'étanchéité selon l'une quelconque des revendications précédentes, **caractérisé en ce qu'**il comprend une pluralité de fils (12) s'étendant d'un bord inférieur de la feuille du couvercle (5) à un bord supérieur.

5. Agencement de couvercle d'étanchéité selon les revendications 3 et 4, **caractérisé en ce que** les fils (12) sont fixés à un anneau de support inférieur (13) au niveau du bord inférieur de la feuille du couvercle (5) et aux supports (8) au niveau de la partie de fixation de tuyau (5d).

6. Agencement de couvercle d'étanchéité selon la revendication 5, **caractérisé en ce que** lesdits fils (12) sont incorporés à l'intérieur de la feuille de couvercle.

7. Agencement de couvercle d'étanchéité selon l'une quelconque des revendications précédentes, **caractérisé en ce que** le matériau de feuille de couvercle comprend une pluralité de couches de matériau ayant des propriétés différentes, telles qu'au moins une couche résistant à l'eau, au moins une couche résistant à une température élevée, au moins une couche anti-érosion, et au moins une couche de matériau isolant.
